# FASCICULE DE BREVET EUROPEEN

(11) **EP 4 347 397 B1**
(45) Date de publication et mention de la délivrance du brevet: **07.05.2025**
(21) Numéro de dépôt: 22730518.2
(22) Date de dépôt: 25.05.2022
(51) Int. Cl.: B64U 10/60, B64C 39/02, B64C 23/08, B64B 1/52, B64B 1/56, B64F 3/00, F03D 3/00, F03D 5/06

(54) **SYSTEME DE PILOTAGE A DISTANCE D'UN AERONEF A EFFET MAGNUS**
FERNBEDIENUNGSSYSTEM FÜR EIN MAGNUSEFFEKTFLUGZEUG
REMOTE CONTROL SYSTEM FOR A MAGNUS-EFFECT AIRCRAFT

(30) Priorité: 27.05.2021 FR 2105554
(43) Date de publication de la demande: 10.04.2024
(73) Titulaire: Wind Fisher, 38190 Les Adrets (FR)
(72) Inventeur: SMITH, Garrett, 31770 Colomiers (FR); TARDELLA, Armand, 89110 Merry-la-Vallée (FR)
(74) Mandataire: INNOV-GROUP
(86) Numéro de dépôt international: PCT/EP2022/064342
(87) Numéro de publication internationale: WO 2022/248631

(56) Documents cités:
- WO-A1-2007/139412
- WO-A2-2012/125052
- DE-A1- 102013 205 781
- FR-A1- 3 043 386
- US-A1- 2008 296 905

## Description

### Domaine technique

L'invention se rapporte au domaine technique des systèmes de pilotage d'un aéronef du type à effet Magnus.

L'invention trouve notamment son application dans :
- la production d'énergie électrique ;
- le port d'une charge utile, par exemple pour les télécommunications ou la surveillance.

### État de l'art

Le fonctionnement d'un aéronef à effet Magnus est connu de l'homme du métier, et est notamment décrit dans le livre de R. Schmehl et al. « *Airborne Wind Energy: Advances in Technology Development and Research* », Springer, p.280 et p.304.

Un système de pilotage d'un aéronef à effet Magnus, connu de l'état de la technique, comporte :
- un aéronef, du type à effet Magnus, comportant un cylindre s'étendant suivant un axe longitudinal, le cylindre étant mobile en rotation autour de l'axe longitudinal ;
- un moteur électrique, agencé sur l'aéronef pour entraîner en rotation le cylindre autour de l'axe longitudinal ;
- un treuil, comportant un tambour mobile en rotation ;
- un câble de liaison, agencé pour relier l'aéronef au treuil de sorte qu'un mouvement de l'aéronef en sustentation peut être transmis mécaniquement au treuil, le câble de liaison étant un câble d'alimentation électrique agencé pour alimenter électriquement le moteur ;
- un générateur électrique, agencé pour convertir une rotation du tambour du treuil, obtenue par une transmission mécanique du mouvement de l'aéronef en sustentation, en une énergie électrique.

Un tel système de l'état de la technique n'est pas entièrement satisfaisant dans la mesure où le moteur d'entraînement du cylindre, embarqué sur l'aéronef, doit être alimenté électriquement par le câble de liaison afin de s'affranchir d'un problème d'autonomie. Il en résulte des contraintes sur le choix d'un câble de liaison qui doit être électriquement conducteur. Or, les frettages des câbles de liaison électriques sont très sollicités et sont donc susceptibles de se dégrader avec des risques de désintégration.

Un autre exemple de l'art antérieur est fourni par le document DE102013205781A1 qui divulgue un dispositif pour générer de l'énergie électrique en utilisant l'énergie éolienne, comportant un composant flottant relié à un composant au sol par un connecteur qui peut être déplacé par les mouvements ascendants et descendants du composant flottant.

### Exposé de l'invention

L'invention vise à remédier en tout ou partie aux inconvénients précités. A cet effet, l'invention a pour objet un système de pilotage à distance d'un aéronef, comportant :
- un aéronef, du type à effet Magnus, comportant un cylindre s'étendant suivant un axe longitudinal, le cylindre étant mobile en rotation autour de l'axe longitudinal ;
- une paire d'éléments rotatifs, agencée à distance de l'aéronef ;
- des moyens d'entraînement, agencés pour entraîner un mouvement de rotation de la paire d'éléments rotatifs ;
- un câble de liaison, agencé pour relier la paire d'éléments rotatifs au cylindre de l'aéronef de sorte que le mouvement de rotation de la paire d'éléments rotatifs, entraîné par les moyens d'entraînement, est transmis mécaniquement au cylindre de l'aéronef de manière à mettre en rotation le cylindre autour de l'axe longitudinal.

Ainsi, un tel système selon l'invention permet de s'affranchir d'un moteur électrique embarqué sur l'aéronef pour entraîner en rotation le cylindre autour de l'axe longitudinal (i.e. l'axe de tangage de l'aéronef). En effet, selon l'invention, le cylindre est entraîné en rotation autour de l'axe longitudinal par un transfert mécanique avec l'élément rotatif via le câble de liaison, ce qui permet de réduire les pertes de conversion d'énergie par rapport à l'état de la technique. Le choix du câble de liaison n'est pas contraint, le câble de liaison n'a pas à être électriquement conducteur, contrairement à l'état de la technique, ce qui permet de s'affranchir du problème de la dégradation potentielle des frettages.

L'entraînement en rotation du cylindre autour de l'axe longitudinal est ainsi déporté, par exemple au sein d'une station terrestre ou maritime où l'élément rotatif et les moyens d'entraînement de l'élément rotatif peuvent être disposés, ce qui permet d'alléger l'aéronef.

Par ailleurs, un avantage procuré par la paire d'éléments rotatifs est de contrôler les deux sens de rotation du cylindre de l'aéronef autour de l'axe longitudinal (l'axe de tangage), ce qui permet d'éviter de croiser des portions du câble de liaison. Le contrôle de la longueur du câble de liaison entre l'aéronef et les éléments rotatifs permet de créer un mouvement de va-et-vient de l'aéronef en sustentation. La paire d'éléments rotatifs comporte des premier et second éléments rotatifs. Les premier et second éléments rotatifs peuvent être indépendants au sens où les premier et second éléments rotatifs peuvent avoir une vitesse de rotation différente (enroulement, déroulement, arrêt).

Le système selon l'invention peut comporter une ou plusieurs des caractéristiques suivantes.

Selon une caractéristique de l'invention, le câble de liaison est enroulé autour du cylindre de l'aéronef de sorte que le mouvement de rotation des éléments rotatifs, entraîné par les moyens d'entraînement, est transmis mécaniquement au cylindre de l'aéronef par une friction du câble de liaison de manière à mettre en rotation le cylindre autour de l'axe longitudinal.

Ainsi, un avantage procuré est de permettre un transfert mécanique direct entre le câble de liaison et le cylindre de l'aéronef pour contrôler l'aéronef selon l'axe de tangage en contrôlant la vitesse de rotation du cylindre autour de l'axe longitudinal.

Selon une caractéristique de l'invention, le système comporte un dispositif de transmission agencé pour coopérer mécaniquement avec le câble de liaison et le cylindre de l'aéronef de sorte que le mouvement de rotation des éléments rotatifs, entraîné par les moyens d'entraînement, est transmis mécaniquement au cylindre de l'aéronef par le dispositif de transmission de manière à mettre en rotation le cylindre autour de l'axe longitudinal.

Ainsi, un avantage procuré est de permettre un transfert mécanique indirect entre le câble de liaison et le cylindre de l'aéronef (par l'intermédiaire du dispositif de transmission) pour contrôler l'aéronef selon l'axe de tangage en contrôlant la vitesse de rotation du cylindre autour de l'axe longitudinal.

Selon une caractéristique de l'invention, le dispositif de transmission comporte une configuration dans laquelle une transmission mécanique au cylindre du mouvement de rotation de l'élément rotatif est interrompue, de sorte que le cylindre est libre en rotation autour de l'axe longitudinal ; le dispositif de transmission comportant de préférence une roue libre ou un embrayage.

Ainsi, un avantage procuré par cette configuration est de pouvoir rembobiner le câble de liaison sans transmettre de puissance au cylindre de l'aéronef, lorsque la transmission mécanique est interrompue.

Selon une caractéristique de l'invention, l'aéronef, en sustentation, est destiné à être soumis à un vent ; le système comportant des moyens de commande, configurés pour commander les moyens d'entraînement en fonction du vent.

Ainsi, un avantage procuré est de pouvoir commander le couple et la vitesse de rotation de l'élément rotatif.

Selon une caractéristique de l'invention, l'aéronef comporte des moyens de guidage, agencé pour guider le câble de liaison entre deux positions par rapport au cylindre définissant un angle de roulis maximal.

Ainsi, un avantage procuré est de faciliter le pilotage de l'aéronef en contrôlant l'angle de roulis de l'aéronef. Les moyens de guidage sont agencés par rapport au cylindre pour maintenir un déplacement du câble de liaison suivant un axe parallèle à l'axe longitudinal du cylindre entre les deux positions définissant l'angle de roulis maximal.

Selon une caractéristique de l'invention, le cylindre présente des première et deuxième extrémités longitudinales ; le système comportant des premier et/ou deuxième câbles d'attache, fixés respectivement aux première et/ou deuxième extrémités longitudinales du cylindre, et reliés respectivement à des premier et/ou deuxième treuils.

Ainsi, un avantage procuré est de pouvoir contrôler l'aéronef selon l'axe de roulis en contrôlant la longueur des premier et/ou deuxième câbles d'attache entre l'aéronef et respectivement les premier et/ou deuxième treuils.

Selon une caractéristique de l'invention qui n'est pas couverte par les revendications, le système comporte une zone d'ancrage, agencée à distance de l'aéronef, et le câble de liaison est fixé à la zone d'ancrage.

Ainsi, un avantage procuré par la zone d'ancrage est de permettre la commande du couple sur le cylindre indépendamment de l'équilibre entre les forces aérodynamiques et la somme des tensions dans les parties du câble de liaison.

Selon une caractéristique de l'invention, le système comporte :
- une paire additionnelle d'éléments rotatifs, agencée à distance de l'aéronef ;
- un câble de liaison additionnel ;
système dans lequel :
- les moyens d'entraînement sont agencés pour entraîner un mouvement de rotation de la paire additionnelle d'éléments rotatifs ;
- le câble de liaison additionnel est agencé pour relier la paire additionnelle d'éléments rotatifs au cylindre de l'aéronef de sorte que le mouvement de rotation de la paire additionnelle d'éléments rotatifs, entraîné par les moyens d'entraînement, est transmis mécaniquement au cylindre de l'aéronef de manière à mettre en rotation le cylindre autour de l'axe longitudinal.

Ainsi, un avantage procuré est de pouvoir transmettre la puissance désirée au cylindre à tout moment, y compris lors du rembobinage du câble de liaison ou du câble de liaison additionnel.

Selon une caractéristique de l'invention :
- l'aéronef comporte des premier et deuxième cylindres s'étendant respectivement suivant des premier et deuxième axes longitudinaux, les premier et deuxième cylindres étant mobiles en rotation respectivement autour des premier et deuxième axes longitudinaux ;
- le câble de liaison est agencé pour relier la paire d'éléments rotatifs au premier cylindre de l'aéronef de sorte que le mouvement de rotation de la paire d'éléments rotatifs, entraîné par les moyens d'entraînement, est transmis mécaniquement au premier cylindre de l'aéronef de manière à mettre en rotation le premier cylindre autour du premier axe longitudinal ;
- le câble de liaison additionnel est agencé pour relier la paire additionnelle d'éléments rotatifs au deuxième cylindre de l'aéronef de sorte que le mouvement de rotation de la paire additionnelle d'éléments rotatifs, entraîné par les moyens d'entraînement, est transmis mécaniquement au deuxième cylindre de l'aéronef de manière à mettre en rotation le deuxième cylindre autour du deuxième axe longitudinal.

Ainsi, un avantage procuré est de pouvoir contrôler l'aéronef selon l'axe de lacet en introduisant un différentiel de vitesses de rotation entre la paire d'éléments rotatifs et la paire additionnelle d'éléments rotatifs. Il en résulte une traînée différentielle qui génère un couple autour de l'axe de lacet de l'aéronef. Il est alors possible de s'affranchir d'un dispositif d'empennage pour stabiliser l'aéronef selon l'axe de lacet. Il est également possible d'envisager des vols dynamiques avec la possibilité de manœuvrer l'aéronef autour de l'axe de lacet en faisant des trajectoires en forme de « 8 » à une altitude donnée pour faire des allers-retours. Par « vol dynamique », on entend un vol durant lequel l'aéronef est en mouvement de manière constante et s'adapte de manière continue aux caractéristiques du vent.

Selon une caractéristique de l'invention, le système comporte des premier et deuxième ensembles, comprenant chacun :
- deux paires d'éléments rotatifs agencées à distance de l'aéronef, et
- deux câbles de liaison ;
système dans lequel :
- l'aéronef comporte des premier et deuxième cylindres s'étendant respectivement suivant des premier et deuxième axes longitudinaux, les premier et deuxième cylindres étant mobiles en rotation respectivement autour des premier et deuxième axes longitudinaux ;
- les moyens d'entraînement sont agencés pour entraîner un mouvement de rotation des éléments rotatifs des premier et deuxième ensembles ;
- chaque câble de liaison du premier ensemble est agencé pour relier une paire d'éléments rotatifs du premier ensemble au premier cylindre de l'aéronef de sorte que le mouvement de rotation des éléments rotatifs du premier ensemble, entraîné par les moyens d'entraînement, est transmis mécaniquement au premier cylindre de l'aéronef de manière à mettre en rotation le premier cylindre autour du premier axe longitudinal ;
- chaque câble de liaison du deuxième ensemble est agencé pour relier une paire d'éléments rotatifs du deuxième ensemble au deuxième cylindre de l'aéronef de sorte que le mouvement de rotation des éléments rotatifs du deuxième ensemble, entraîné par les moyens d'entraînement, est transmis mécaniquement au deuxième cylindre de l'aéronef de manière à mettre en rotation le deuxième cylindre autour du deuxième axe longitudinal.

Ainsi, un avantage procuré est de pouvoir transmettre la puissance désirée au cylindre correspondant à tout moment, y compris lors du rembobinage de l'un des deux câbles de liaison de l'ensemble correspondant.

Selon une caractéristique de l'invention, l'aéronef, en sustentation, présente un axe de lacet et est destiné à être soumis à un vent ; le système comportant un élément coudé présentant :
- une première branche, reliée au premier cylindre ;
- une seconde branche, reliée au deuxième cylindre ;
les première et seconde branches formant un angle de flèche adapté pour stabiliser l'aéronef selon l'axe de lacet en fonction du vent.

Selon une caractéristique de l'invention, l'élément rotatif est un tambour d'un treuil.

Ainsi, un avantage procuré par un treuil est de pouvoir contrôler à la fois :
- la longueur du câble de liaison s'étendant entre le tambour et l'aéronef,
- la vitesse de rotation du tambour.

Selon une caractéristique de l'invention, le câble de liaison est agencé pour relier l'aéronef à l'élément rotatif de sorte qu'un mouvement de l'aéronef en sustentation peut être transmis mécaniquement à l'élément rotatif.

Selon une caractéristique de l'invention, le système comporte un convertisseur, agencé pour convertir une rotation de l'élément rotatif, obtenue par une transmission mécanique du mouvement de l'aéronef en sustentation, en une énergie.

Ainsi, un avantage procuré est de pouvoir récupérer l'énergie mécanique issue du mouvement de l'aéronef en sustentation.

Selon une caractéristique de l'invention, l'aéronef, en sustentation, présente un axe de lacet, et est destiné à être soumis à un vent ; le système comportant un dispositif d'empennage, agencé pour stabiliser l'aéronef selon l'axe de lacet en fonction du vent.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est une vue schématique en perspective d'un système selon l'invention, qui est pas couvert par les revendications, illustrant notamment la présence d'une zone d'ancrage à laquelle est fixé le câble de liaison.
Figure 2 est une vue schématique en perspective d'un système selon l'invention, illustrant notamment la présence de plusieurs éléments rotatifs réalisés sous la forme de poulies de renvoi.
Figure 3 est une vue schématique en perspective d'un système selon l'invention, illustrant notamment la présence de moteurs linéaires qui entraînent indirectement un mouvement de rotation des éléments rotatifs.
Figure 4a est une vue schématique en perspective d'un système selon l'invention, illustrant notamment la présence d'un arbre de transmission (avec stabilisateur) entraînant en rotation un élément rotatif, l'arbre de transmission étant monté sur l'élément rotatif contre l'action de moyens de rappel élastique.
Figure 4b est une vue schématique en perspective d'un système selon l'invention, illustrant notamment un mouflage relié aux éléments rotatifs.
Figure 5 est une vue schématique en perspective d'un système selon l'invention, illustrant notamment un câble de liaison formant une boucle continue.
Figure 6 est une vue schématique de côté d'un premier mode principal de réalisation d'un système selon l'invention. L'encart de la figure 6 est une vue à l'échelle agrandie d'un mode de réalisation des moyens de guidage du câble de liaison, permettant de guider le câble de liaison entre deux positions par rapport au cylindre de manière à définir un angle de roulis maximal.
Figure 7 est une vue schématique en perspective du premier mode principal de réalisation d'un système selon l'invention illustré à la figure 6.
Figure 8 est une vue schématique en perspective et en transparence d'un mode de réalisation d'un cylindre d'un aéronef appartenant à un système selon l'invention.
Figure 9 est une vue schématique en perspective d'un deuxième mode principal de réalisation d'un système selon l'invention, illustrant notamment la présence de deux cylindres.
Figure 10 est une vue schématique en perspective d'un système selon l'invention, illustrant notamment un angle de flèche entre les deux cylindres.
Figure 11 est une vue schématique partielle de dessus d'un système selon l'invention, illustrant notamment un élément coudé reliant les deux cylindres.
Figure 12 est une vue schématique en perspective d'un troisième mode principal de réalisation d'un système selon l'invention qui n'est pas couvert par les revendications.
Figure 13 est une vue schématique en perspective d'un quatrième mode principal de réalisation d'un système selon l'invention.
Figure 14a est une vue schématique en perspective d'un système selon l'invention, illustrant notamment la présence d'un câble d'attache à une extrémité du cylindre.
Figure 14b est une vue schématique en perspective d'un système selon l'invention, illustrant notamment la présence de deux câbles d'attache aux extrémités du cylindre.
Figure 15 est une vue schématique en perspective d'un mode de réalisation d'un système selon l'invention.
Figure 16 est une vue schématique illustrant notamment des moyens de conversion en énergie d'une rotation d'éléments rotatifs, obtenue par une transmission mécanique du mouvement de l'aéronef en sustentation.
Figure 17a est une vue schématique partielle en perspective d'un système selon l'invention, illustrant une position du dispositif d'empennage lors d'une phase de production d'énergie.
Figure 17b est une vue schématique partielle en perspective d'un système selon l'invention, illustrant une position du dispositif d'empennage lors d'une phase de rembobinage du câble de liaison.

Il est à noter que les dessins décrits ci-avant sont schématiques, et ne sont pas nécessairement à l'échelle par souci de lisibilité et pour en simplifier leur compréhension.

### Exposé détaillé des modes de réalisation

Les éléments identiques ou assurant la même fonction porteront les mêmes références pour les différents modes de réalisation, par souci de simplification.

Un objet de l'invention est un système de pilotage à distance d'un aéronef, comportant :
- un aéronef, du type à effet Magnus, comportant un cylindre 1 s'étendant suivant un axe longitudinal Y, le cylindre 1 étant mobile en rotation autour de l'axe longitudinal Y ;
- un élément rotatif 2, agencé à distance de l'aéronef ;
- des moyens d'entraînement 3, agencés pour entraîner un mouvement de rotation de l'élément rotatif 2 ;
- un câble de liaison 4, agencé pour relier l'élément rotatif 2 au cylindre 1 de l'aéronef de sorte que le mouvement de rotation de l'élément rotatif 2, entraîné par les moyens d'entraînement 3, est transmis mécaniquement au cylindre 1 de l'aéronef de manière à mettre en rotation le cylindre 1 autour de l'axe longitudinal Y.

### Aéronef

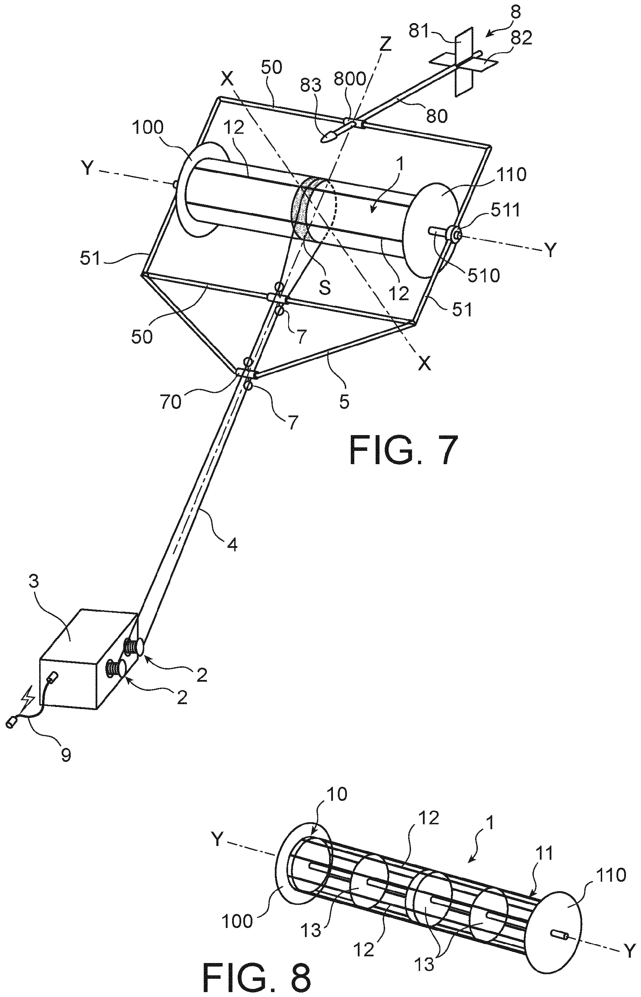

Le cylindre 1 forme une aile de l'aéronef. La mise en rotation du cylindre 1 autour de l'axe longitudinal Y permet d'exploiter l'effet Magnus pour augmenter la portance de l'aéronef. Le cylindre 1 présente des première et deuxième extrémités longitudinales 10, 11 (illustrées à la figure 8). L'aéronef comporte avantageusement des premier et deuxième disques 100, 110, montés respectivement aux première et deuxième extrémités longitudinales 10, 11 du cylindre 1 de manière à améliorer les performances aérodynamiques de l'aéronef. Les premier et deuxième disques 100, 110 sont avantageusement montés de manière amovible aux première et deuxième extrémités longitudinales 10, 11 du cylindre 1 afin de se désengager du cylindre 1 pour assurer une fonction de train d'atterrissage. Les premier et deuxième disques 100, 110 sont avantageusement libres en rotation par rapport au cylindre 1 lorsque l'aéronef est au sol. En vol, les premier et deuxième disques 100, 110 sont solidaires en rotation du cylindre 1.

Le cylindre 1 présente avantageusement une section transversale de forme circulaire, possédant un diamètre noté D. Le cylindre 1 présente avantageusement une longueur, notée L, suivant l'axe longitudinal Y vérifiant un ratio L/D compris entre 6 et 12.

Le cylindre 1 est avantageusement rempli d'un gaz possédant une masse volumique inférieure à la masse volumique de l'air, de manière à créer une portance archimédienne. L'aéronef possède alors une masse inférieure à la masse de l'air de sorte que l'aéronef est un aérostat. Le gaz peut être de l'hydrogène ou de l'hélium. Le gaz peut être sous pression, par exemple entre 20 mbars et 50 mbars selon les dimensions du cylindre 1, de sorte que la pression du gaz à l'intérieur du cylindre 1 est supérieure à la pression atmosphérique. Le cylindre 1 peut être réalisé sous la forme d'un ballon. Le cylindre 1 peut comporter une enveloppe réalisée dans un matériau textile étanche au gaz. Le gaz sous pression permet de rigidifier le cylindre 1. Le cylindre 1 est avantageusement muni d'organes de renfort 12, pouvant être réalisés sous la forme de tiges longitudinales s'étendant suivant un axe parallèle à l'axe longitudinal Y du cylindre 1, afin d'améliorer la résistance mécanique du cylindre 1. Comme illustré à la figure 8, le cylindre 1 peut comporter des éléments internes 13, par exemple réalisés sous la forme de disques, agencés pour renforcer la tenue mécanique du cylindre 1. Les éléments internes 13 peuvent également être agencés pour former des compartiments à l'intérieur du cylindre 1, par exemple pour un gaz de pressurisation.

L'aéronef comporte avantageusement une machine dynamoélectrique, agencée pour convertir une énergie mécanique (rotation du cylindre 1 autour de l'axe longitudinal Y) en une énergie électrique. L'énergie électrique générée par la machine dynamoélectrique peut alimenter électriquement des composants de l'aéronef, tels que des capteurs, des ordinateurs de bord, des dispositifs de dégivrage, des dispositifs de maintien de pression du gaz à l'intérieur du cylindre 1 etc. Il est également possible d'utiliser d'autres types de machines permettant de convertir l'énergie mécanique de la rotation du cylindre 1 autour de l'axe longitudinal Y (e.g. conversion en chaleur pour le dégivrage).

L'aéronef est avantageusement équipé de moyens d'acquisition des caractéristiques du vent soufflant sur le cylindre 1, tel qu'un anémomètre, configuré pour envoyer des données représentatives des caractéristiques du vent V à des moyens de traitement/commande tels qu'un microcontrôleur. Les moyens de traitement/commande peuvent être embarqués sur l'aéronef. L'aéronef est avantageusement équipé de moyens d'acquisition de paramètres propres au cylindre 1, tels qu'une centrale inertielle configurée pour transmettre aux moyens de traitement/commande des données représentatives de l'orientation du cylindre 1 par rapport au vent V, de la vitesse du cylindre 1, de l'accélération du cylindre 1 etc.

L'aéronef peut comporter des premier et deuxième cylindres 1, 1' s'étendant respectivement suivant des premier et deuxième axes longitudinaux Y, Y', les premier et deuxième cylindres 1, 1' étant mobiles en rotation respectivement autour des premier et deuxième axes longitudinaux Y, Y'.

L'aéronef comporte une structure de support 5, agencée pour supporter le cylindre 1. Le cylindre 1 est monté mobile en rotation sur la structure de support 5 autour de l'axe longitudinal Y. La structure de support 5 peut comporter un ensemble de branches formant un cadre pour le cylindre. La structure de support peut comporter deux branches longitudinales 50, s'étendant chacune suivant un premier axe parallèle à l'axe longitudinal Y du cylindre 1. La structure de support 5 peut comporter deux branches latérales 51, s'étendant chacune suivant un deuxième axe perpendiculaire au premier axe, et reliées aux branches longitudinales 50. Le cylindre 1 peut être monté mobile en rotation autour de l'axe longitudinal Y sur les branches latérales 51 de la structure de support 5, par exemple grâce à des axes mécaniques 510 et des roulements mécaniques 511 (notamment illustrés à la figure 7).

L'aéronef, en sustentation, présente un axe de lacet Z et est destiné à être soumis à un vent V. Par convention, l'axe longitudinal Y suivant lequel s'étend le cylindre 1 est l'axe de tangage. L'axe de lacet Z et l'axe de roulis X sont perpendiculaires entre eux, et s'étendent dans un plan perpendiculaire à l'axe longitudinal Y (i.e. l'axe de tangage). Lorsque l'axe de tangage Y est horizontal, l'axe de lacet Z est vertical et l'axe de roulis X est horizontal. L'axe de tangage Y, l'axe de lacet Z et l'axe de roulis X sont perpendiculaires entre eux, comme illustré à la figure 7.

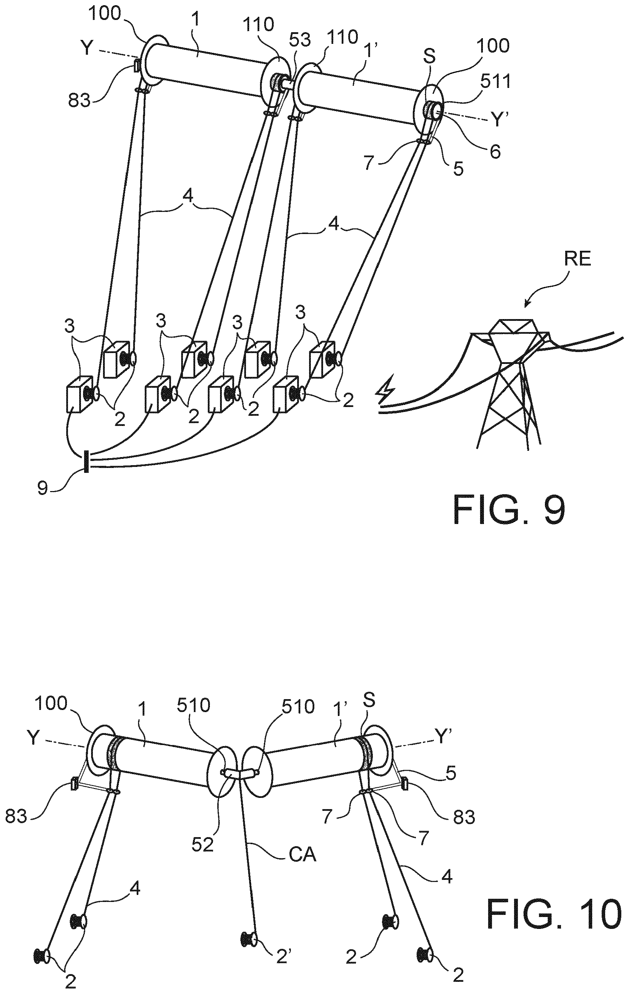

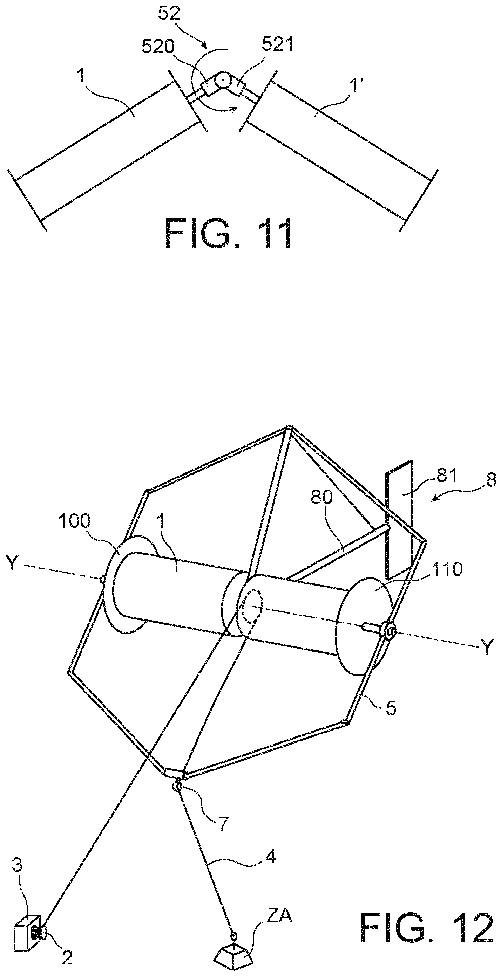

Le système comporte avantageusement un élément coudé 52 (illustré aux figures 10 et 11) présentant :
- une première branche 520, reliée au premier cylindre 1 ;
- une seconde branche 521, reliée au deuxième cylindre 1' ;
les première et seconde branches 520, 521 formant un angle de flèche adapté pour stabiliser l'aéronef selon l'axe de lacet Z en fonction du vent V.

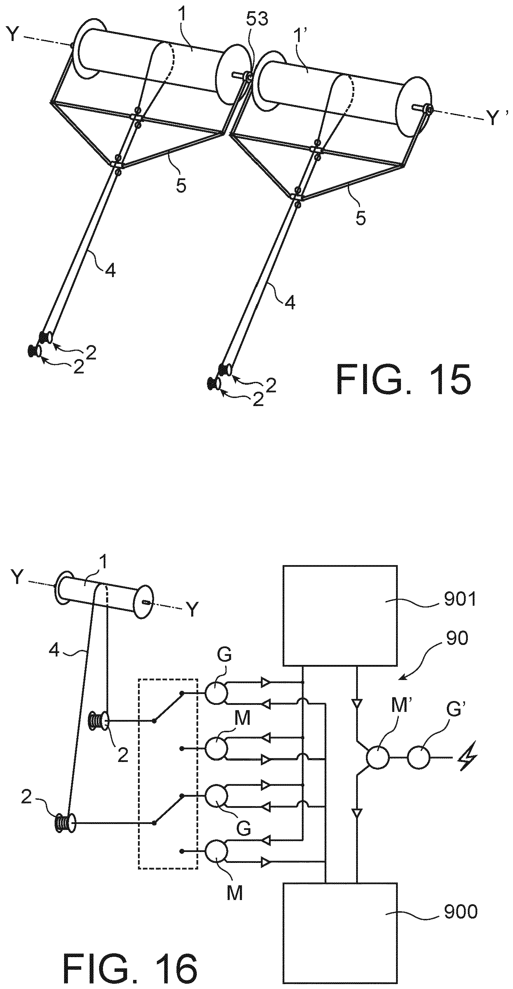

Selon une variante, le système comporte un élément de liaison 53 (illustré aux figures 9 et 15), rectiligne, agencé pour relier les premier et deuxième cylindres 1, 1'.

L'aéronef peut comporter des hélices (non représentées), agencées sur la structure de support 5 pour faciliter le décollage et l'atterrissage de l'aéronef.

### Elément(s) rotatif(s)

L'élément rotatif 2 est avantageusement un tambour d'un treuil, ce qui permet de transformer un mouvement de rotation du tambour en un mouvement linéaire du câble de liaison 4 et réciproquement. A titre d'exemple, la vitesse linéaire du câble de liaison 4 peut être comprise entre 0 m.s⁻¹ et 40 m.s⁻¹. Le câble de liaison 4 est avantageusement enroulé autour du tambour du treuil.

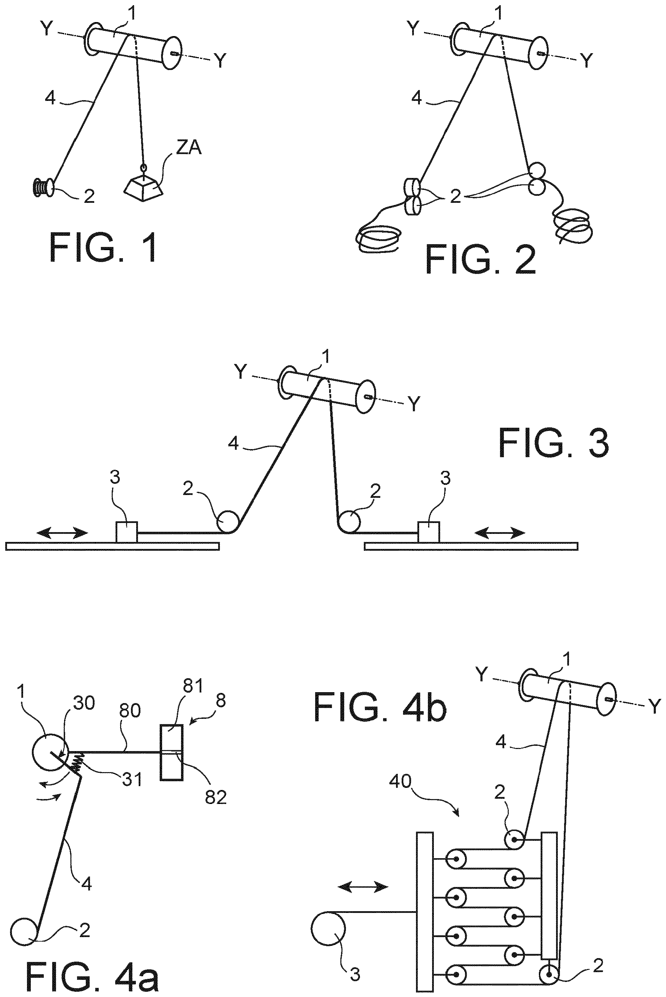

Selon une variante illustrée à la figure 2, le système peut comporter deux couples d'éléments rotatifs 2, chaque élément rotatif 2 étant réalisé sous la forme d'une poulie de renvoi. Chaque couple d'éléments rotatifs 2 est agencé pour pincer le câble de liaison 4.

Selon une variante illustrée à la figure 4a, le cylindre 1 peut être muni d'un arbre de transmission 30 entraînant en rotation le cylindre 1 par pulsations, l'arbre de transmission 30 étant monté sur l'aéronef contre l'action de moyens de rappel élastique 31, par exemple un ressort. Le câble de liaison 4 relie l'arbre de transmission 30 à l'élément rotatif 2. L'élément rotatif 2 donne des pulsations au câble de liaison 4 qui tire sur l'arbre de transmission 30 et met en rotation le cylindre 1 autour de l'axe longitudinal Y. L'aéronef est avantageusement muni d'un stabilisateur horizontal 82 (cf. paragraphe « Dispositif d'empennage »), agencé pour compenser le couple créé par les moyens de rappel élastique 31.

### Moyens d'entraînement

Les moyens d'entraînement 3 peuvent comporter un moteur, de préférence électrique, agencé pour entraîner un mouvement de rotation de l'élément rotatif 2. Les moyens d'entraînement 3 peuvent entraîner directement ou indirectement l'élément rotatif 2. Un exemple d'entraînement indirect est illustré à la figure 3 où des moteurs linéaires 3 tirent le câble de liaison 4 et par là-même entraînent en rotation les éléments rotatifs 2. Lorsque le système comporte une paire d'éléments rotatifs 2 (des premier et second éléments rotatifs 2) agencée à distance de l'aéronef, les moyens d'entraînement sont agencés pour entraîner un mouvement de rotation de la paire d'éléments rotatifs 2. Autrement dit, les moyens d'entraînement sont agencés pour entraîner le premier et/ou le second élément rotatif 2 de la paire. Les premier et second éléments rotatifs peuvent être indépendants au sens où les premier et second éléments rotatifs peuvent avoir une vitesse de rotation différente (enroulement, déroulement, arrêt). En d'autres termes, il est possible d'introduire un différentiel de vitesses de rotation entre les premier et second éléments rotatifs 2 de la paire.

L'aéronef, en sustentation, est destiné à être soumis à un vent V. Le système comporte avantageusement des moyens de commande, configurés pour commander les moyens d'entraînement en fonction du vent V. Ainsi, il est possible de faire varier la portance de l'aéronef, et donc l'altitude de l'aéronef, en faisant varier la vitesse de rotation de l'élément rotatif 2.

Les moyens de commande peuvent commander la vitesse de rotation du tambour du treuil de sorte que la vitesse tangentielle en un point du cylindre 1 est supérieure à la vitesse du vent V soufflant au voisinage de ce point du cylindre 1 (vent apparent).

### Station

Le système comporte avantageusement une station, de préférence terrestre ou maritime, dans laquelle sont disposés le ou les éléments rotatifs 2 et les moyens d'entraînement 3. La station peut être fixe ou mobile par rapport au référentiel terrestre. La station mobile peut être réalisée sous la forme d'un véhicule tel qu'un sous-marin.

Selon un mode de réalisation non illustré, le système peut comporter des moyens de modification de la direction (e.g. des poulies de renvoi), agencés pour modifier la direction du câble de liaison 4 entre la station et l'aéronef. Ainsi, il est par exemple possible d'éviter que le câble de liaison 4 ne soit en contact avec des obstacles présents au sol.

La station et l'aéronef sont avantageusement munis de moyens de communication, de préférence sans fil, de sorte qu'une communication peut être établie entre la station et l'aéronef.

### Câble(s) de liaison

Le câble de liaison 4 peut être réalisé dans un matériau diélectrique. Le câble de liaison 4 présente avantageusement une résistance importante en tension. Le câble de liaison 4 peut être réalisé dans un matériau polymère, par exemple le polyéthylène haute densité. Le câble de liaison 4 peut comprendre un conduit de gaz, agencé pour alimenter le cylindre 1 en gaz sous pression.

Comme illustré aux figures 1 et 12, selon des formes de réalisation qui ne sont pas couvertes par les revendications, le système peut comporter une zone d'ancrage ZA, agencée à distance de l'aéronef, et le câble de liaison 4 est fixé à la zone d'ancrage ZA.

Comme illustrée à la figure 4b, le câble de liaison 4 peut être relié à un mouflage 40 de manière à former une boucle continue. Les moyens d'entraînement 3 peuvent ainsi être déportés par rapport aux éléments rotatifs 2.

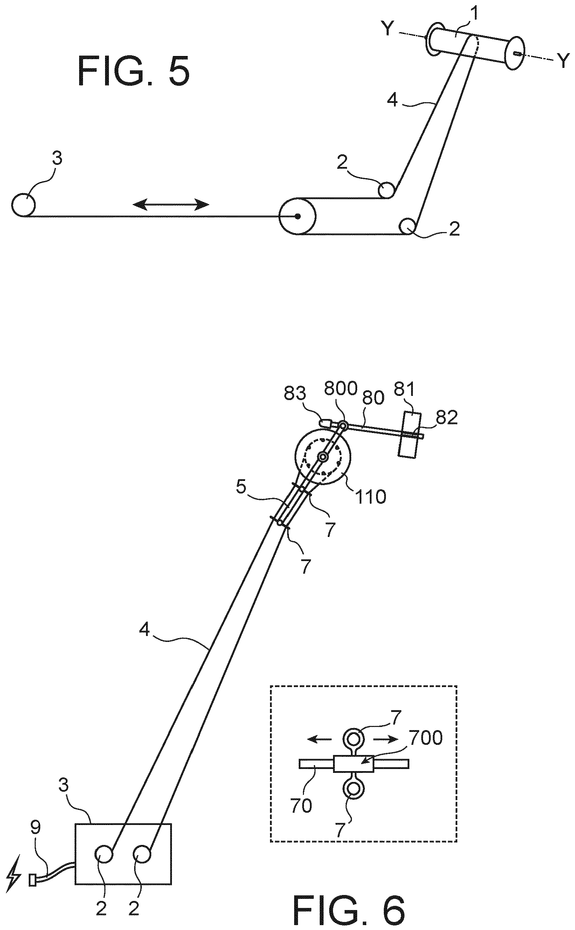

Selon une variante illustrée à la figure 5, le câble de liaison 4 peut être relié à un ensemble d'éléments rotatifs 2 de manière à former une boucle continue et les moyens d'entraînement 3 sont déportés par rapport aux éléments rotatifs 2. Un des deux éléments rotatifs 2 illustrés à la figure 5 peut être bloqué en rotation de manière à autoriser une translation du câble de liaison 4 afin de mettre en rotation le cylindre 1 autour de l'axe longitudinal Y.

### Transmission du mouvement de rotation de l'élément rotatif au cylindre

Selon un mode de réalisation, qui n'est pas couvert par les revendications, le câble de liaison 4 est enroulé autour du cylindre 1 de l'aéronef de sorte que le mouvement de rotation de l'élément rotatif 2, entraîné par les moyens d'entraînement 3, est transmis mécaniquement au cylindre 1 de l'aéronef par une friction du câble de liaison 4 de manière à mettre en rotation le cylindre 1 autour de l'axe longitudinal Y.

Selon l'invention, le système comporte une paire d'éléments rotatifs 2 agencée à distance de l'aéronef, le câble de liaison 4 étant enroulé autour du cylindre 1 de l'aéronef de sorte que le mouvement de rotation de la paire d'éléments rotatifs 2, entraîné par les moyens d'entraînement 3, est transmis mécaniquement au cylindre 1 de l'aéronef par une friction du câble de liaison 4 de manière à mettre en rotation le cylindre 1 autour de l'axe longitudinal Y.

Selon une variante de réalisation, le système comporte un dispositif de transmission 6 agencé pour coopérer mécaniquement avec le câble de liaison 4 et le cylindre 1 de l'aéronef de sorte que le mouvement de rotation de l'élément rotatif 2, entraîné par les moyens d'entraînement 3, est transmis mécaniquement au cylindre 1 de l'aéronef par le dispositif de transmission 6 de manière à mettre en rotation le cylindre 1 autour de l'axe longitudinal Y. Le dispositif de transmission 6 comporte avantageusement une configuration dans laquelle une transmission mécanique au cylindre 1 du mouvement de rotation de l'élément rotatif 2 est interrompue, de sorte que le cylindre 1 est libre en rotation autour de l'axe longitudinal Y. Le dispositif de transmission 6 comporte de préférence une roue libre ou un embrayage. Le dispositif de transmission 6 est avantageusement monté aux première et deuxième extrémités longitudinales 10, 11 du cylindre 1, comme illustré à la figure 9.

Lorsque le système comporte une paire d'éléments rotatifs 2 agencée à distance de l'aéronef, le dispositif de transmission 6 est agencé pour coopérer mécaniquement avec le câble de liaison 4 et le cylindre 1 de l'aéronef de sorte que le mouvement de rotation de la paire d'éléments rotatifs 2, entraînée par les moyens d'entraînement 3, est transmis mécaniquement au cylindre 1 de l'aéronef par le dispositif de transmission 6 de manière à mettre en rotation le cylindre 1 autour de l'axe longitudinal Y. Le dispositif de transmission 6 comporte avantageusement une configuration dans laquelle une transmission mécanique au cylindre 1 du mouvement de rotation de la paire d'éléments rotatifs 2 est interrompue, de sorte que le cylindre 1 est libre en rotation autour de l'axe longitudinal Y.

### Moyens de guidage

L'aéronef comporte avantageusement des moyens de guidage, agencé pour guider le câble de liaison 4 entre deux positions par rapport au cylindre 1 définissant un angle de roulis maximal. Les moyens de guidage comportent avantageusement des anneaux 7, montés sur la structure de support 5 de l'aéronef, et adaptés pour recevoir le câble de liaison 4. Les moyens de guidage comportent avantageusement un tube 70, agencé sur la structure de support 5 de l'aéronef. Deux anneaux 7, adapté chacun pour recevoir le câble de liaison 4, sont avantageusement montés coulissants sur le tube 70, par exemple à l'aide d'un coulisseau 700, de manière à définir l'angle de roulis maximal. A titre de variante, les moyens de guidage peuvent être des éléments roulants (e.g. poulies, rouleaux) pour minimiser la friction avec le câble de liaison 4.

Les moyens de guidage sont avantageusement agencés pour guider le câble de liaison 4 à la surface S du cylindre 1. Le système est avantageusement configuré pour contrôler l'angle d'enroulement du câble de liaison 4 à la surface S du cylindre 1 (et donc la puissance transmise) en fonction des tensions du câble de liaison 4 de part et d'autre du cylindre 1, par exemple grâce à la formule du cabestan (également dénommée formule d'Eytelwein) connue de l'homme du métier.

### Câble(s) d'attache

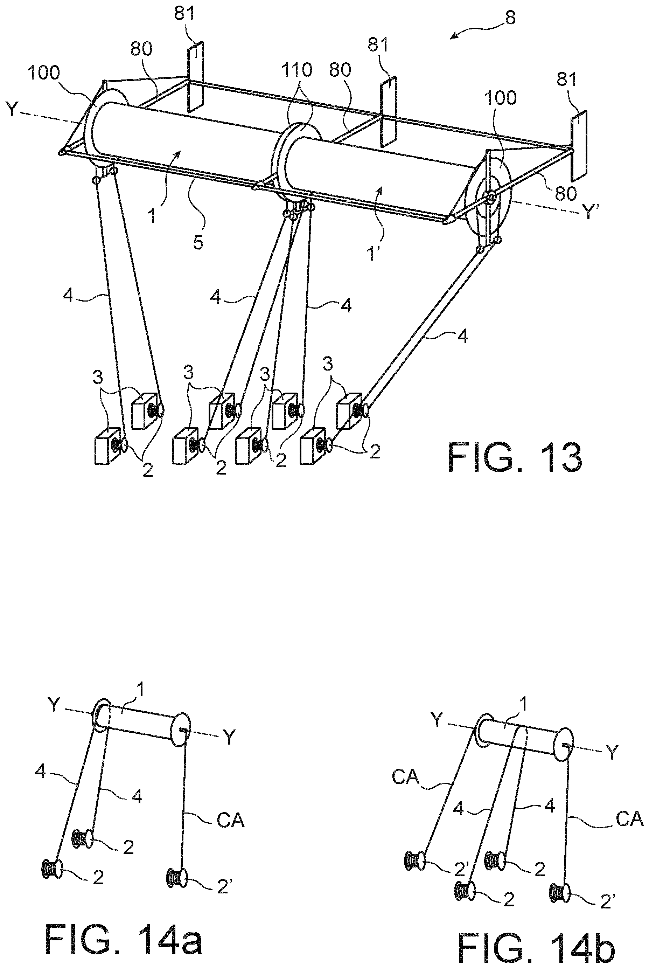

En variante des moyens de guidage, le système peut comporter des premier et/ou deuxième câbles d'attache CA, fixés respectivement aux première et/ou deuxième extrémités longitudinales 10, 11 du cylindre 1, et reliés respectivement à des premier et/ou deuxième treuils 2'. Comme illustré à la figure 14a, le système comporte un câble d'attache CA fixé à une extrémité longitudinale 10, 11 du cylindre 1. Comme illustré à la figure 14b, le système comporte deux câbles d'attache CA fixés chacun à une extrémité longitudinale 10, 11 distincte du cylindre 1.

Comme illustré à la figure 10, le système peut comporter un câble d'attache CA fixé à l'élément coudé 52 et relié à un treuil 2' pour contrôler l'angle de tangage de l'aéronef.

### Modes de réalisation avec un cylindre

Selon un premier mode de réalisation, notamment illustré aux figures 6 et 7, le système peut comporter une paire d'éléments rotatifs 2, agencée à distance de l'aéronef ;
système dans lequel :
- les moyens d'entraînement 3 sont agencés pour entraîner un mouvement de rotation de la paire d'éléments rotatifs 2 ;
- le câble de liaison 4 est agencé pour relier la paire d'éléments rotatifs 2 au cylindre 1 de l'aéronef de sorte que le mouvement de rotation de la paire d'éléments rotatifs 2, entraîné par les moyens d'entraînement 3, est transmis mécaniquement au cylindre 1 de l'aéronef de manière à mettre en rotation le cylindre 1 autour de l'axe longitudinal Y.

Selon un deuxième mode de réalisation non illustré, le système peut comporter :
- une paire additionnelle d'éléments rotatifs 2, agencée à distance de l'aéronef ;
- un câble de liaison 4 additionnel ;
système dans lequel :
- les moyens d'entraînement 3 sont agencés pour entraîner un mouvement de rotation de la paire additionnelle d'éléments rotatifs 2 ;
- le câble de liaison 4 additionnel est agencé pour relier la paire additionnelle d'éléments rotatifs 2 au cylindre 1 de l'aéronef de sorte que le mouvement de rotation de la paire additionnelle d'éléments rotatifs 2, entraîné par les moyens d'entraînement 3, est transmis mécaniquement au cylindre 1 de l'aéronef de manière à mettre en rotation le cylindre 1 autour de l'axe longitudinal Y.

### Modes de réalisation avec deux cylindres

L'aéronef peut comporter des premier et deuxième cylindres 1, 1' s'étendant respectivement suivant des premier et deuxième axes longitudinaux Y, Y', les premier et deuxième cylindres 1, 1' étant mobiles en rotation respectivement autour des premier et deuxième axes longitudinaux Y, Y'.

Selon un premier mode de réalisation, notamment illustré aux figures 10 et 15, le système peut comporter :
- une paire d'éléments rotatifs 2 et une paire additionnelle d'éléments rotatifs 2, agencées à distance de l'aéronef ;
- un câble de liaison 4 et un câble de liaison 4 additionnel.

Les moyens d'entraînement 3 sont agencés pour entraîner un mouvement de rotation de la paire d'éléments rotatifs 2 et de la paire additionnelle d'éléments rotatifs 2.

Le câble de liaison 4 est agencé pour relier la paire d'éléments rotatifs 2 au premier cylindre 1 de l'aéronef de sorte que le mouvement de rotation de la paire d'éléments rotatifs 2, entraîné par les moyens d'entraînement 3, est transmis mécaniquement au premier cylindre 1 de l'aéronef de manière à mettre en rotation le premier cylindre 1 autour du premier axe longitudinal Y.

Le câble de liaison 4 additionnel est agencé pour relier la paire additionnelle d'éléments rotatifs 2 au deuxième cylindre 1' de l'aéronef de sorte que le mouvement de rotation de la paire additionnelle d'éléments rotatifs 2, entraîné par les moyens d'entraînement 3, est transmis mécaniquement au deuxième cylindre 1' de l'aéronef de manière à mettre en rotation le deuxième cylindre 1' autour du deuxième axe longitudinal Y'.

Selon un deuxième mode de réalisation, notamment illustré aux figures 9 et 13, le système peut comporter des premier et deuxième ensembles, comprenant chacun :
- deux paires d'éléments rotatifs 2 agencées à distance de l'aéronef, et
- deux câbles de liaison 4 ;
système dans lequel :
- les moyens d'entraînement 3 sont agencés pour entraîner un mouvement de rotation des éléments rotatifs 2 des premier et deuxième ensembles ;
- chaque câble de liaison 4 du premier ensemble est agencé pour relier une paire d'éléments rotatifs 2 du premier ensemble au premier cylindre 1 de l'aéronef de sorte que le mouvement de rotation des éléments rotatifs 2 du premier ensemble, entraîné par les moyens d'entraînement 3, est transmis mécaniquement au premier cylindre 1 de l'aéronef de manière à mettre en rotation le premier cylindre 1 autour du premier axe longitudinal Y ;
- chaque câble de liaison 4 du deuxième ensemble est agencé pour relier une paire d'éléments rotatifs 2 du deuxième ensemble au deuxième cylindre 1' de l'aéronef de sorte que le mouvement de rotation des éléments rotatifs 2 du deuxième ensemble, entraîné par les moyens d'entraînement 3, est transmis mécaniquement au deuxième cylindre 1' de l'aéronef de manière à mettre en rotation le deuxième cylindre 1' autour du deuxième axe longitudinal Y'.

Il est possible d'envisager la présence d'un nombre de cylindres 1, 1' supérieur à 2, chaque cylindre 1, 1' étant relié à au moins une paire d'éléments rotatifs 2.

### Dispositif d'empennage

L'aéronef, en sustentation, présente un axe de lacet Z, et est destiné à être soumis à un vent V. Le système comporte avantageusement un dispositif d'empennage 8, agencé pour stabiliser l'aéronef selon l'axe de lacet Z en fonction du vent V. Le dispositif d'empennage 8 est monté sur la structure de support 5 de l'aéronef. Plus précisément, le dispositif d'empennage 8 peut être monté mobile en rotation sur une branche longitudinale 50 de la structure de support 5, autour du premier axe de la branche longitudinale 50.

Le dispositif d'empennage 8 comporte avantageusement un bras 80 s'étendant suivant un axe longitudinal. Le bras 80 présente des première et seconde extrémités opposées. Le bras 80 est monté pivotant sur ladite branche longitudinale 50 de la structure du support 5, autour du premier axe de la branche longitudinale 50, par exemple à l'aide d'un mécanisme d'articulation 800. Le dispositif d'empennage 8 comporte avantageusement un premier stabilisateur 81, dit vertical, s'étendant suivant une première direction perpendiculaire à l'axe longitudinal du bras 80. Lorsque l'axe longitudinal du bras 80 est horizontal, la première direction est verticale. Le premier stabilisateur 81 est fixé sur la première extrémité du bras 80. Le dispositif d'empennage 8 comporte avantageusement un deuxième stabilisateur 82, dit horizontal, s'étendant suivant une deuxième direction, perpendiculaire à la première direction et à l'axe longitudinal du bras 80. Lorsque l'axe longitudinal du bras 80 est horizontal, la deuxième direction est horizontale. Le deuxième stabilisateur 82 est fixé sur la première extrémité du bras 80. Le deuxième stabilisateur 82 permet un alignement passif du dispositif d'empennage 8 avec le vent V apparent pour maximiser l'effet de stabilité du premier stabilisateur 81.

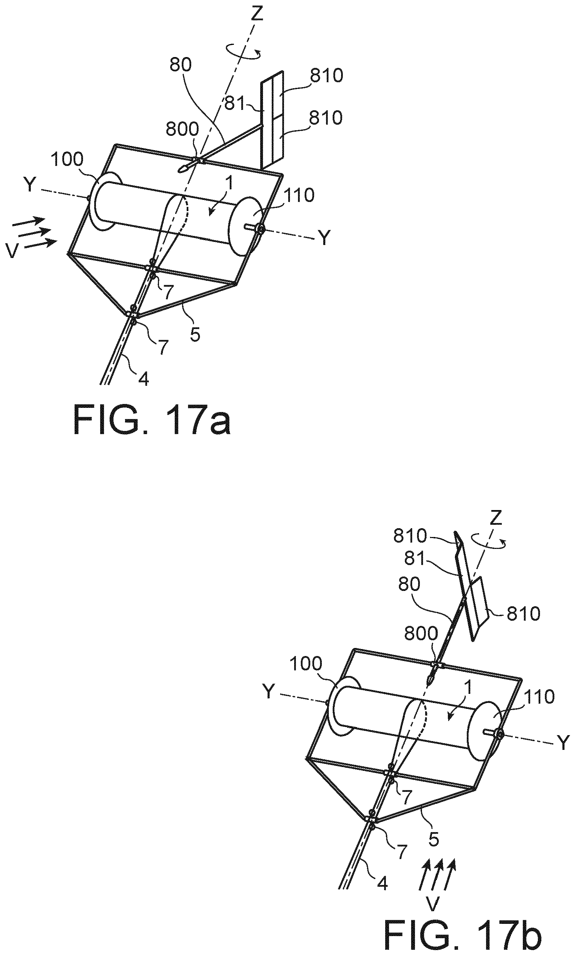

Le premier stabilisateur 81 comprend avantageusement deux gouvernes 810, indépendantes, montées pivotantes autour de la première direction suivant laquelle s'étend le premier stabilisateur 81. Comme illustré aux figures 17a et 17b, l'angle de pivotement des deux gouvernes 810 par rapport à la première direction du premier stabilisateur 81 est adapté à la direction du vent V de manière à générer un moment cinétique autour de l'axe de lacet Z. La position de l'axe longitudinal du bras 80 est parallèle à la direction du vent V.

Comme illustré aux figures 6 et 7, le dispositif d'empennage 8 comprend avantageusement un module 83 de capteurs, monté à la seconde extrémité du bras 80. A titre d'exemple non limitatif, le module 83 de capteurs peut être adapté pour mesurer la direction et la vitesse du vent V, la position, l'altitude, la vitesse et l'accélération de l'aéronef. A titre de variante, comme illustré à la figure 9, le module 83 de capteurs peut être monté sur la structure de support 5 de l'aéronef.

### Application à la conversion d'énergie

Le câble de liaison 4 est avantageusement agencé pour relier l'aéronef à l'élément rotatif 2 de sorte qu'un mouvement de l'aéronef en sustentation peut être transmis mécaniquement à l'élément rotatif 2.

Le système comporte avantageusement un convertisseur, agencé pour convertir une rotation de l'élément rotatif 2, obtenue par une transmission mécanique du mouvement de l'aéronef en sustentation, en une énergie.

Selon un mode de réalisation, le convertisseur peut comporter un générateur électrique, agencé pour convertir une rotation de l'élément rotatif en une énergie électrique. Lorsque l'élément rotatif 2 est un tambour d'un treuil, les moyens d'entraînement 3 consomment de l'énergie pour enrouler le câble de liaison 4 tandis que les mouvements de l'aéronef en sustentation permettent de dérouler le câble de liaison 4 et de récupérer une énergie électrique. Le générateur électrique, par exemple disposé dans la station, peut être électriquement relié à un réseau électrique RE (illustré à la figure 9) ou un système de stockage d'énergie via des moyens d'interconnexions électriques 9. Le réseau électrique RE peut alimenter la station, en particulier les moyens d'entraînement 3, via les moyens d'interconnexions électriques 9.

Selon un mode de réalisation illustré à la figure 16, chaque élément rotatif 2 est connecté à une transmission mécanique TM. La transmission mécanique TM présente :
- une première position, dans laquelle la transmission mécanique TM est reliée à un générateur G hydraulique (ou pneumatique) tel qu'une pompe ; ou
- une seconde position, dans laquelle la transmission mécanique TM est reliée à un moteur M hydraulique (ou pneumatique).

Les générateurs G hydrauliques/pneumatiques appartiennent à un circuit 90 hydraulique/pneumatique comportant un réservoir basse pression 900 et un réservoir haute pression 901. Les générateurs G hydrauliques/pneumatiques pompent le fluide (e.g. huile ou air comprimé) du circuit 90 hydraulique/pneumatique à partir du réservoir basse pression 900 (e.g. l'atmosphère pour un circuit 90 pneumatique) vers le réservoir haute pression 901. L'énergie est donc stockée par la pression du fluide dans le réservoir haute pression 901.

Quand le câble de liaison 4 doit être rembobiné, la transmission mécanique TM bascule de la première position vers la seconde position. L'énergie est consommée par l'écoulement du fluide à partir du réservoir haute pression 901 vers le réservoir basse pression 900.

Pour produire de l'électricité, le circuit 90 hydraulique/pneumatique est relié à un moteur M' hydraulique/pneumatique additionnel qui fait tourner un générateur G' électrique. La production d'électricité peut donc être lissée via ce système de stockage temporaire (de l'ordre de quelques heures), ou la production d'électricité peut être adaptée selon les besoins de la demande de consommation de l'électricité.

## Revendications

1. Système de pilotage à distance d'un aéronef, comportant :
- un aéronef, du type à effet Magnus, comportant un cylindre (1) s'étendant suivant un axe longitudinal (Y), le cylindre (1) étant mobile en rotation autour de l'axe longitudinal (Y) ;
- une paire d'éléments rotatifs (2), agencée à distance de l'aéronef ;
- des moyens d'entraînement (3), agencés pour entraîner un mouvement de rotation de la paire d'éléments rotatifs (2) ;
- un câble de liaison (4), agencé pour relier la paire d'éléments rotatifs (2) au cylindre (1) de l'aéronef de sorte que le mouvement de rotation de la paire d'éléments rotatifs (2), entraîné par les moyens d'entraînement (3), est transmis mécaniquement au cylindre (1) de l'aéronef de manière à mettre en rotation le cylindre (1) autour de l'axe longitudinal (Y).

2. Système selon la revendication 1, dans lequel le câble de liaison (4) est enroulé autour du cylindre (1) de l'aéronef de sorte que le mouvement de rotation de la paire d'éléments rotatifs (2), entraîné par les moyens d'entraînement (3), est transmis mécaniquement au cylindre (1) de l'aéronef par une friction du câble de liaison (4) de manière à mettre en rotation le cylindre (1) autour de l'axe longitudinal (Y).

3. Système selon la revendication 1, comportant un dispositif de transmission (6) agencé pour coopérer mécaniquement avec le câble de liaison (4) et le cylindre (1) de l'aéronef de sorte que le mouvement de rotation de la paire d'éléments rotatifs (2), entraîné par les moyens d'entraînement (3), est transmis mécaniquement au cylindre (1) de l'aéronef par le dispositif de transmission (6) de manière à mettre en rotation le cylindre (1) autour de l'axe longitudinal (Y).

4. Système selon la revendication 3, dans lequel le dispositif de transmission (6) comporte une configuration dans laquelle une transmission mécanique au cylindre (1) du mouvement de rotation de la paire d'éléments rotatifs (2) est interrompue, de sorte que le cylindre (1) est libre en rotation autour de l'axe longitudinal (Y) ; le dispositif de transmission (6) comportant de préférence une roue libre ou un embrayage.

5. Système selon l'une des revendications 1 à 4, dans lequel l'aéronef, en sustentation, est destiné à être soumis à un vent (V) ; le système comportant des moyens de commande, configurés pour commander les moyens d'entraînement (3) en fonction du vent (V).

6. Système selon l'une des revendications 1 à 5, dans lequel l'aéronef comporte des moyens de guidage (7), agencé pour guider le câble de liaison (4) entre deux positions par rapport au cylindre (1) définissant un angle de roulis maximal.

7. Système selon l'une des revendications 1 à 5, dans lequel le cylindre (1) présente des première et deuxième extrémités longitudinales (10, 11) ; le système comportant des premier et/ou deuxième câbles d'attache (CA), fixés respectivement aux première et/ou deuxième extrémités longitudinales (10, 11) du cylindre (1), et reliés respectivement à des premier et/ou deuxième treuils (2').

8. Système selon l'une des revendications 1 à 7, comportant :
- une paire additionnelle d'éléments rotatifs (2), agencée à distance de l'aéronef ;
- un câble de liaison (4) additionnel ;
système dans lequel :
- les moyens d'entraînement (3) sont agencés pour entraîner un mouvement de rotation de la paire additionnelle d'éléments rotatifs (2) ;
- le câble de liaison (4) additionnel est agencé pour relier la paire additionnelle d'éléments rotatifs (2) au cylindre (1) de l'aéronef de sorte que le mouvement de rotation de la paire additionnelle d'éléments rotatifs (2), entraîné par les moyens d'entraînement (3), est transmis mécaniquement au cylindre (1) de l'aéronef de manière à mettre en rotation le cylindre (1) autour de l'axe longitudinal (Y).

9. Système selon la revendication 8, dans lequel :
- l'aéronef comporte des premier et deuxième cylindres (1, 1') s'étendant respectivement suivant des premier et deuxième axes longitudinaux (Y, Y'), les premier et deuxième cylindres (1, 1') étant mobiles en rotation respectivement autour des premier et deuxième axes longitudinaux (Y, Y') ;
- le câble de liaison (4) est agencé pour relier la paire d'éléments rotatifs (2) au premier cylindre (1) de l'aéronef de sorte que le mouvement de rotation de la paire d'éléments rotatifs (2), entraîné par les moyens d'entraînement (3), est transmis mécaniquement au premier cylindre (1) de l'aéronef de manière à mettre en rotation le premier cylindre (1) autour du premier axe longitudinal (Y) ;
- le câble de liaison (4) additionnel est agencé pour relier la paire additionnelle d'éléments rotatifs (2) au deuxième cylindre (1') de l'aéronef de sorte que le mouvement de rotation de la paire additionnelle d'éléments rotatifs (2), entraîné par les moyens d'entraînement (3), est transmis mécaniquement au deuxième cylindre (1') de l'aéronef de manière à mettre en rotation le deuxième cylindre (1') autour du deuxième axe longitudinal (Y').

10. Système selon l'une des revendications 1 à 7, comportant des premier et deuxième ensembles, comprenant chacun :
- deux paires d'éléments rotatifs (2) agencées à distance de l'aéronef, et
- deux câbles de liaison (4) ;
système dans lequel :
- l'aéronef comporte des premier et deuxième cylindres (1, 1') s'étendant respectivement suivant des premier et deuxième axes longitudinaux (Y, Y'), les premier et deuxième cylindres (1, 1') étant mobiles en rotation respectivement autour des premier et deuxième axes longitudinaux (Y, Y') ;
- les moyens d'entraînement (3) sont agencés pour entraîner un mouvement de rotation des éléments rotatifs (2) des premier et deuxième ensembles ;
- chaque câble de liaison (4) du premier ensemble est agencé pour relier une paire d'éléments rotatifs (2) du premier ensemble au premier cylindre (1) de l'aéronef de sorte que le mouvement de rotation des éléments rotatifs (2) du premier ensemble, entraîné par les moyens d'entraînement (3), est transmis mécaniquement au premier cylindre (1) de l'aéronef de manière à mettre en rotation le premier cylindre (1) autour du premier axe longitudinal (Y) ;
- chaque câble de liaison (4) du deuxième ensemble est agencé pour relier une paire d'éléments rotatifs (2) du deuxième ensemble au deuxième cylindre (1') de l'aéronef de sorte que le mouvement de rotation des éléments rotatifs (2) du deuxième ensemble, entraîné par les moyens d'entraînement (3), est transmis mécaniquement au deuxième cylindre (1') de l'aéronef de manière à mettre en rotation le deuxième cylindre (1') autour du deuxième axe longitudinal (Y').

11. Système selon la revendication 9 ou 10, dans lequel l'aéronef, en sustentation, présente un axe de lacet (Z) et est destiné à être soumis à un vent (V) ; le système comportant un élément coudé (52) présentant :
- une première branche (520), reliée au premier cylindre (1) ;
- une seconde branche (521), reliée au deuxième cylindre (1') ;
les première et seconde branches (520, 521) formant un angle de flèche adapté pour stabiliser l'aéronef selon l'axe de lacet (Z) en fonction du vent (V).

12. Système selon l'une des revendications 1 à 11, dans lequel l'élément rotatif (2) est un tambour d'un treuil.

13. Système selon l'une des revendications 1 à 12, dans lequel le câble de liaison (4) est agencé pour relier l'aéronef à la paire d'éléments rotatifs (2) de sorte qu'un mouvement de l'aéronef en sustentation peut être transmis mécaniquement aux éléments rotatifs (2).

14. Système selon la revendication 13, comportant un convertisseur, agencé pour convertir une rotation de la paire d'éléments rotatifs (2), obtenue par une transmission mécanique (TM) du mouvement de l'aéronef en sustentation, en une énergie.

15. Système selon l'une des revendications 1 à 14, dans lequel l'aéronef, en sustentation, présente un axe de lacet (Z), et est destiné à être soumis à un vent (V) ; le système comportant un dispositif d'empennage (8), agencé pour stabiliser l'aéronef selon l'axe de lacet (Z) en fonction du vent (V).

## Patentansprüche

1. Fernbedienungssystem für ein Flugzeug, umfassend:
- ein Flugzeug vom Typ Magnus-Effekt, umfassend einen Zylinder (1), der sich entlang einer Längsachse (Y) erstreckt, wobei der Zylinder (1) um die Längsachse (Y) drehbeweglich ist;
- ein Paar drehbarer Elemente (2), das von dem Flugzeug entfernt angeordnet ist;
- Antriebsmittel (3), die dazu angeordnet sind, eine Drehbewegung des Paares drehbarer Elemente (2) zu bewirken;
- ein Verbindungskabel (4), das dazu angeordnet ist, das Paar drehbarer Elemente (2) mit dem Zylinder (1) des Flugzeugs zu verbinden, sodass die Drehbewegung des Paares drehbarer Elemente (2), die durch die Antriebsmittel (3) bewirkt wird, mechanisch auf den Zylinder (1) des Flugzeugs übertragen wird, um den Zylinder (1) um die Längsachse (Y) in Drehung zu versetzen.

2. System nach Anspruch 1, wobei das Verbindungskabel (4) um den Zylinder (1) des Flugzeugs gewickelt ist, sodass die Drehbewegung des Paares drehbarer Elemente (2), die durch die Antriebsmittel (3) bewirkt wird, durch Reibung des Verbindungskabels (4) mechanisch auf den Zylinder (1) des Flugzeugs übertragen wird, um den Zylinder (1) um die Längsachse (Y) in Drehung zu versetzen.

3. System nach Anspruch 1, umfassend eine Übertragungsvorrichtung (6), die dazu angeordnet ist, mit dem Verbindungskabel (4) und dem Zylinder (1) des Flugzeugs mechanisch zusammenzuwirken, sodass die Drehbewegung des Paares drehbarer Elemente (2), die durch die Antriebsmittel (3) bewirkt wird, durch die Übertragungsvorrichtung (6) mechanisch auf den Zylinder (1) des Flugzeugs übertragen wird, um den Zylinder (1) um die Längsachse (Y) in Drehung zu versetzen.

4. System nach Anspruch 3, wobei die Übertragungsvorrichtung (6) eine Konfiguration umfasst, in der eine mechanische Übertragung der Drehbewegung des Paares drehbarer Elemente (2) auf den Zylinder (1) unterbrochen ist, sodass der Zylinder (1) um die Längsachse (Y) frei drehen kann; wobei die Übertragungsvorrichtung (6) vorzugsweise einen Freilauf oder eine Kupplung umfasst.

5. System nach einem der Ansprüche 1 bis 4, wobei das Flugzeug im Schwebezustand dazu bestimmt ist, einem Wind (V) ausgesetzt zu sein; wobei das System Steuermittel umfasst, die dazu konfiguriert sind, die Antriebsmittel (3) in Abhängigkeit des Windes (V) zu steuern.

6. System nach einem der Ansprüche 1 bis 5, wobei das Flugzeug Führungsmittel (7) umfasst, die dazu angeordnet sind, das Verbindungskabel (4) zwischen zwei Positionen in Bezug auf den Zylinder (1) zu führen, die einen maximalen Rollwinkel bilden.

7. System nach einem der Ansprüche 1 bis 5, wobei der Zylinder (1) ein erstes und ein zweites Längsende (10, 11) aufweist; wobei das System ein erstes und/oder ein zweites Haltekabel (CA) umfasst, die jeweils an dem ersten und/oder dem zweiten Längsende (10, 11) des Zylinders (1) befestigt sind und jeweils mit einer ersten und/oder einer zweiten Winde (2') verbunden sind.

8. System nach einem der Ansprüche 1 bis 7, umfassend:
- ein zusätzliches Paar drehbarer Elemente (2), das von dem Flugzeug entfernt angeordnet ist;
- ein zusätzliches Verbindungskabel (4);
wobei bei dem System:
- die Antriebsmittel (3) dazu angeordnet sind, eine Drehbewegung des zusätzlichen Paares drehbarer Elemente (2) zu bewirken;
- das zusätzliche Verbindungskabel (4) dazu angeordnet ist, das zusätzliche Paar drehbarer Elemente (2) mit dem Zylinder (1) des Flugzeugs zu verbinden, sodass die Drehbewegung des zusätzlichen Paares drehbarer Elemente (2), die durch die Antriebsmittel (3) bewirkt wird, mechanisch auf den Zylinder (1) des Flugzeugs übertragen wird, um den Zylinder (1) um die Längsachse (Y) in Drehung zu versetzen.

9. System nach Anspruch 8, wobei:
- das Flugzeug einen ersten und einen zweiten Zylinder (1, 1') umfasst, die sich jeweils entlang einer ersten bzw. einer zweiten Längsachse (Y, Y') erstrecken, wobei der erste und der zweite Zylinder (1, 1') jeweils um die erste bzw. die zweite Längsachse (Y, Y') drehbeweglich sind;
- das Verbindungskabel (4) dazu angeordnet ist, das Paar drehbarer Elemente (2) mit dem ersten Zylinder (1) des Flugzeugs zu verbinden, sodass die Drehbewegung des Paares drehbarer Elemente (2), die durch die Antriebsmittel (3) bewirkt wird, mechanisch auf den ersten Zylinder (1) des Flugzeugs übertragen wird, um den ersten Zylinder (1) um die erste Längsachse (Y) in Drehung zu versetzen;
- das zusätzliche Verbindungskabel (4) dazu angeordnet ist, das zusätzliche Paar drehbarer Elemente (2) mit dem zweiten Zylinder (1') des Flugzeugs zu verbinden, sodass die Drehbewegung des zusätzlichen Paares drehbarer Elemente (2), die durch die Antriebsmittel (3) bewirkt wird, mechanisch auf den zweiten Zylinder (1') des Flugzeugs übertragen wird, um den zweiten Zylinder (1') um die zweite Längsachse (Y') in Drehung zu versetzen.

10. System nach einem der Ansprüche 1 bis 7, umfassend eine erste und eine zweite Anordnung, die jeweils Folgendes beinhalten:
- zwei Paare drehbarer Elemente (2), die von dem Flugzeug entfernt angeordnet sind, und
- zwei Verbindungskabel (4);
wobei bei dem System:
- das Flugzeug einen ersten und einen zweiten Zylinder (1, 1') umfasst, die sich jeweils entlang einer ersten bzw. einer zweiten Längsachse (Y, Y') erstrecken, wobei der erste und der zweite Zylinder (1, 1') jeweils um die erste bzw. die zweite Längsachse (Y, Y') drehbeweglich sind;
- die Antriebsmittel (3) dazu angeordnet sind, eine Drehbewegung der drehbaren Elemente (2) der ersten und der zweiten Anordnung zu bewirken;
- jedes Verbindungskabel (4) der ersten Anordnung dazu angeordnet ist, ein Paar drehbarer Elemente (2) der ersten Anordnung mit dem ersten Zylinder (1) des Flugzeugs zu verbinden, sodass die Drehbewegung der drehbaren Elemente (2) der ersten Anordnung, die durch die Antriebsmittel (3) bewirkt wird, mechanisch auf den ersten Zylinder (1) des Flugzeugs übertragen wird, um den ersten Zylinder (1) um die erste Längsachse (Y) in Drehung zu versetzen;
- jedes Verbindungskabel (4) der zweiten Anordnung dazu angeordnet ist, ein Paar drehbarer Elemente (2) der zweiten Anordnung mit dem zweiten Zylinder (1') des Flugzeugs zu verbinden, sodass die Drehbewegung der drehbaren Elemente (2) der zweiten Anordnung, die durch die Antriebsmittel (3) bewirkt wird, mechanisch auf den zweiten Zylinder (1') des Flugzeugs übertragen wird, um den zweiten Zylinder (1') um die zweite Längsachse (Y') in Drehung zu versetzen.

11. System nach Anspruch 9 oder 10, wobei das Flugzeug im Schwebezustand eine Gierachse (Z) aufweist und dazu bestimmt ist, einem Wind (V) ausgesetzt zu sein; wobei das System ein gebogenes Element (52) umfasst, das Folgendes aufweist:
- einen ersten Arm (520), der mit dem ersten Zylinder (1) verbunden ist;
- einen zweiten Arm (521), der mit dem zweiten Zylinder (1') verbunden ist;
wobei der erste und der zweite Arm (520, 521) einen Pfeilungswinkel bilden, der dazu angepasst ist, das Flugzeug in Abhängigkeit des Windes (V) entlang der Gierachse (Z) zu stabilisieren.

12. System nach einem der Ansprüche 1 bis 11, wobei das drehbare Element (2) eine Trommel einer Winde ist.

13. System nach einem der Ansprüche 1 bis 12, wobei das Verbindungskabel (4) dazu angeordnet ist, das Flugzeug mit dem Paar drehbarer Elemente (2) zu verbinden, sodass eine Bewegung des Flugzeugs im Schwebezustand mechanisch auf die drehbaren Elemente (2) übertragen werden kann.

14. System nach Anspruch 13, umfassend einen Wandler, der dazu angeordnet ist, eine Drehung des Paares drehbarer Elemente (2), die durch eine mechanische Übertragung (TM) der Bewegung des Flugzeugs im Schwebezustand erhalten wird, in eine Energie umzuwandeln.

15. System nach einem der Ansprüche 1 bis 14, wobei das Flugzeug im Schwebezustand eine Gierachse (Z) aufweist und dazu bestimmt ist, einem Wind (V) ausgesetzt zu sein; wobei das System eine Leitwerkvorrichtung (8) umfasst, die dazu angeordnet ist, das Flugzeug in Abhängigkeit des Windes (V) entlang der Gierachse (Z) zu stabilisieren.

## Claims

1. A remote control system for an aircraft, comprising:
- an aircraft, of the Magnus-effect type, comprising a cylinder (1) extending along a longitudinal axis (Y), the cylinder (1) being able to rotate about the longitudinal axis (Y);
- a pair of rotatable elements (2), arranged at a distance from the aircraft;
- drive means (3), arranged to drive a rotational movement of the pair of rotatable elements (2);
- a connection cable (4), arranged to connect the pair of rotatable elements (2) to the cylinder (1) of the aircraft so that the rotational movement of the pair of rotatable elements (2), driven by the drive means (3), is mechanically transmitted to the cylinder (1) of the aircraft so as to set the cylinder (1) into rotation about the longitudinal axis (Y).

2. The system as claimed in claim 1, wherein the connection cable (4) is wound around the cylinder (1) of the aircraft so that the rotational movement of the pair of rotatable elements (2), driven by the drive means (3), is mechanically transmitted to the cylinder (1) of the aircraft by friction on the connection cable (4) so as to set the cylinder (1) into rotation about the longitudinal axis (Y).

3. The system as claimed in claim 1, comprising a transmission device (6) arranged to mechanically cooperate with the connection cable (4) and the cylinder (1) of the aircraft so that the rotational movement of the pair of rotatable elements (2), driven by the drive means (3), is mechanically transmitted to the cylinder (1) of the aircraft by the transmission device (6) so as to set the cylinder (1) into rotation about the longitudinal axis (Y).

4. The system as claimed in claim 3, wherein the transmission device (6) comprises a configuration in which a mechanical transmission of the rotational movement of the pair of rotatable elements (2) to the cylinder (1) is interrupted, so that the cylinder (1) is free to rotate about the longitudinal axis (Y), with the transmission device (6) preferably comprising a freewheel or a clutch.

5. The system as claimed in any of claims 1 to 4, wherein the aircraft, in lift, is intended to be subjected to wind (V), with the system comprising control means configured to control the drive means (3) as a function of the wind (V).

6. The system as claimed in any of claims 1 to 5, wherein the aircraft comprises guide means (7), arranged to guide the connection cable (4) between two positions relative to the cylinder (1) defining a maximum roll angle.

7. The system as claimed in any of claims 1 to 5, wherein the cylinder (1) has first and second longitudinal ends (10, 11), the system comprising first and/or second attachment cables (CA), respectively fixed to the first and/or second longitudinal ends (10, 11) of the cylinder (1), and respectively connected to first and/or second winches (2').

8. The system as claimed in any of claims 1 to 7, comprising:
- an additional pair of rotatable elements (2), arranged at a distance from the aircraft;
- an additional connection cable (4);
in which system:
- the drive means (3) are arranged to drive a rotational movement of the additional pair of rotatable elements (2);
- the additional connection cable (4) is arranged to connect the additional pair of rotatable elements (2) to the cylinder (1) of the aircraft so that the rotational movement of the additional pair of rotatable elements (2), driven by the drive means (3), is mechanically transmitted to the cylinder (1) of the aircraft so as to set the cylinder (1) into rotation about the longitudinal axis (Y).

9. The system as claimed in claim 8, wherein:
- the aircraft comprises first and second cylinders (1, 1') respectively extending along first and second longitudinal axes (Y, Y'), with the first and second cylinders (1, 1') being able to rotate about the first and second longitudinal axes (Y, Y'), respectively;
- the connection cable (4) is arranged to connect the pair of rotatable elements (2) to the first cylinder (1) of the aircraft so that the rotational movement of the pair of rotatable elements (2), driven by the drive means (3), is mechanically transmitted to the first cylinder (1) of the aircraft so as to set the first cylinder (1) into rotation about the first longitudinal axis (Y);
- the additional connection cable (4) is arranged to connect the additional pair of rotatable elements (2) to the second cylinder (1') of the aircraft so that the rotational movement of the additional pair of rotatable elements (2), driven by the drive means (3), is mechanically transmitted to the second cylinder (1') of the aircraft so as to set the second cylinder (1') into rotation about the second longitudinal axis (Y').

10. The system as claimed in any of claims 1 to 7, comprising first and second assemblies, each comprising:
- two pairs of rotatable elements (2) arranged at a distance from the aircraft; and
- two connection cables (4);
in which system:
- the aircraft comprises first and second cylinders (1, 1') respectively extending along first and second longitudinal axes (Y, Y'), with the first and second cylinders (1, 1') being able to rotate about the first and second longitudinal axes (Y, Y'), respectively;
- the drive means (3) are arranged to drive a rotational movement of the rotatable elements (2) of the first and second assemblies;
- each connection cable (4) of the first assembly is arranged to connect a pair of rotatable elements (2) of the first assembly to the first cylinder (1) of the aircraft so that the rotational movement of the rotatable elements (2) of the first assembly, driven by the drive means (3), is mechanically transmitted to the first cylinder (1) of the aircraft so as to set the first cylinder (1) into rotation about the first longitudinal axis (Y);
- each connection cable (4) of the second assembly is arranged to connect a pair of rotatable elements (2) of the second assembly to the second cylinder (1') of the aircraft so that the rotational movement of the rotatable elements (2) of the second assembly, driven by the drive means (3), is mechanically transmitted to the second cylinder (1') of the aircraft so as to set the second cylinder (1') into rotation about the second longitudinal axis (Y').

11. The system as claimed in claim 9 or 10, wherein the aircraft, in lift, has a yaw axis (Z) and is intended to be subjected to wind (V), the system comprising an elbow element (52) having:
- a first branch (520), connected to the first cylinder (1);
- a second branch (521), connected to the second cylinder (1');
with the first and second branches (520, 521) forming a sweep angle adapted to stabilize the aircraft along the yaw axis (Z) as a function of the wind (V).

12. The system as claimed in any of claims 1 to 11, wherein the rotatable element (2) is a drum of a winch.

13. The system as claimed in any of claims 1 to 12, wherein the connection cable (4) is arranged to connect the aircraft to the pair of rotatable elements (2) so that a lift movement of the aircraft can be mechanically transmitted to the rotatable elements (2).

14. The system as claimed in claim 13, comprising a converter, arranged to convert a rotation of the pair of rotatable elements (2), obtained by a mechanical transmission (TM) of the lift movement of the aircraft, into energy.

15. The system as claimed in any of claims 1 to 14, wherein the aircraft, in lift, has a yaw axis (Z), and is intended to be subjected to wind (V), with the system comprising a tail device (8), arranged to stabilize the aircraft along the yaw axis (Z) as a function of the wind (V).
